# FASCICULE DE BREVET EUROPEEN

(11) **EP 1 972 467 B1**
(45) Date de publication et mention de la délivrance du brevet: **23.12.2009**
(21) Numéro de dépôt: 08290226.3
(22) Date de dépôt: 10.03.2008
(51) Int. Cl.: B60C 11/11

(54) **Pneumatique de type semi-creux, notamment pour machine agricole**
Halbhohlreifen, insbesondere für Landwirtschaftsmaschine
Semi-hollow tyre, in particular for a farming machine

(30) Priorité: 21.03.2007 FR 0702062
(43) Date de publication de la demande: 24.09.2008
(73) Titulaire: OTICO, 77650 Chalmaison (FR)
(72) Inventeur: Piou, Denis, 89340 Villeblevin (FR); Phely, Olivier, 77520 Thenisy (FR)
(74) Mandataire: Bezault, Jean

(56) Documents cités:
- EP-A- 0 795 427
- EP-A- 1 380 198
- EP-A1- 0 552 664
- EP-A1- 0 600 265
- CH-A5- 618 643
- FR-A1- 2 763 279
- US-A- 5 733 394

## Description

L'invention concerne les pneumatiques à usages spéciaux, et notamment ceux destinés à être utilisés avec des matériels agricoles, en particulier des rouleaux destinés à des machines combinées à des semoirs, à des outils de préparation du sol, etc.

La publication FR-A-2 763 279, au nom de la Demanderesse, décrit un pneumatique de type semi-creux à profil en dôme pour un tel usage. Ces pneumatiques sont destinés à être enfilés autour d'un tube central pour constituer un rouleau utilisable dans des machines agricoles. En variante, le pneumatique peut être monté individuellement entre deux flasques.

Ces pneumatiques sont tout particulièrement adaptés aux rouleaux agricoles, qui sont habituellement tirés par un tracteur en étant placés en arrière d'outils de travail du sol, le rouleau pouvant être éventuellement suivi par d'autres outils de travail.

Une application typique est celle des rouleaux pour semoirs, dans lesquels le tracteur tire une machine formée d'une combinaison d'outils semi-portés comprenant : des outils de travail du sol ; ensuite, le rouleau avec ses pneumatiques en dôme qui créent des sillons dans le sol préalablement ameubli par les outils ; puis des semoirs qui viennent déposer des graines ou des semences dans les sillons formés par le passage du rouleau ; et enfin des outils d'enfouissage pour enfouir les graines.

Dans d'autres applications, le rouleau équipé de ses pneumatiques à profil en dôme est placé derrière des outils de travail du sol, par exemple pour assurer le déchaumage du sol après moisson. Dans ce cas, le rouleau n'est pas suivi d'outils, il sert alors essentiellement à rappuyer le sol.

En variante un tel pneumatique à profil en dôme peut être monté sur une jante ou analogue pour constituer une roue individuelle. Plusieurs de ces roues peuvent être alors réunies dans une configuration choisie en étant chacune indépendante pour mieux suivre les irrégularités du sol.

Plus précisément, le pneumatique adapté à ces usages et décrit dans la publication FR-A-2 763 279 précitée comprend un fourreau central propre à être enfilé autour d'un tube horizontal de la machine agricole, et au moins une partie de roulement à profil en dôme comportant une bande de roulement reliée au fourreau par deux flancs de manière à délimiter un espace annulaire creux de section transversale réduite par rapport à la section transversale du profil en dôme.

L'espace annulaire creux n'est pas gonflé, et il peut communiquer avec le milieu ambiant par l'intermédiaire d'un orifice traversant l'épaisseur du fourreau et assurant notamment l'équilibrage des pressions en cours d'utilisation. Du fait de la forme en dôme et de la présence de l'espace annulaire creux de section transversale réduite et non gonflé, la bande de roulement du pneumatique ne s'affaisse pas trop, tout en possédant une souplesse suffisante pour lui permettre de subir des déformations et d'être autonettoyante.

Jusqu'à présent, ces pneumatiques ont été réalisés avec une surface lisse à l'endroit de la bande de roulement et des flancs.

Cependant, dans certaines conditions extrêmes, la présence d'une surface lisse n'est pas favorable.

Par exemple, sur sol sec ou légèrement humide, il peut résulter la formation d'un sillon lisse, qui sous l'action du soleil est susceptible de créer une croûte empêchant la germination des graines ; il serait au contraire souhaitable de créer un émiettement du sol.

Il serait également souhaitable, ce que ne permet pas une bande de roulement lisse, de créer dans le sol des zones de fracture discontinues capables de capter l'eau en cas de pluie, de manière à limiter le ruissellement le long du sillon, notamment sur un terrain en pente.

Enfin, avec des terres très légères ou, à l'opposé, sur des sols lourds et glissants, il peut arriver que le rouleau ne soit pas entraîné en rotation, au moins de façon temporaire.

L'un des buts de l'invention est de proposer un pneumatique du type précité qui résolve ces inconvénients, tout en conservant les caractéristiques avantageuses évoquées plus haut.

L'invention a également pour but de proposer un tel pneumatique qui permette une utilisation non seulement en champ, mais également en déplacement sur route sans relevage du rouleau.

Pour cela, le pneumatique doit pouvoir supporter le roulage sur route avec une bonne endurance et, d'autre part, se nettoyer le plus vite possible, dès le début du roulage, pour éviter de salir de longues portions de route.

L'invention propose à cet effet un pneumatique du type défini en introduction tel que divulgué par la publication FR-A-2 763 279 précitée. Selon l'invention, ce pneumatique comporte une pluralité de crampons périphériques formés en saillie sur la bande de roulement et répartis dans la direction circonférentielle au sommet du profil en dôme.

En d'autres termes, l'invention propose de créer des crampons sur le sommet de la bande de roulement : lorsque le rouleau se déplace pour former les sillons, la présence de ces crampons introduit une discontinuité dans le sillon, favorisant l'émiettement du sol et la création de zones de fracture permettant de capter l'eau, comme exposé plus haut.

La présence de ces crampons élargit ainsi la plage d'utilisation du pneumatique, donc sa polyvalence dans des conditions extrêmes : terres très légères, sols lourds et glissants, etc.

Ces crampons sont de préférence disposés sur la bande de roulement de part et d'autre du plan médian du pneumatique.

Très avantageusement, les crampons s'étendent, en direction axiale, depuis le sommet des flancs vers le plan médian du pneumatique, sans faire axialement saillie de la surface de ces flancs.

Les crampons sont ainsi parfaitement compatibles avec l'utilisation de grattoirs positionnés, comme sur les modèles lisses actuels, entre les pneumatiques : cette région conserve en effet le même profil, dans la mesure où les crampons sont disposés sur la bande de roulement du profil en dôme, et non sur les flancs, qui pourront être aisément nettoyés.

Dans une forme de réalisation, au moins certains des crampons s'étendent suivant une plus grande dimension formant un angle par rapport à l'axe du pneumatique. Leur largeur, considérée entre leur extrémité la plus proche du sommet du flanc et leur extrémité la plus proche du plan médian du pneumatique, est alors de préférence de dimension supérieure à leur longueur, considérée en direction circonférentielle.

Ces crampons peuvent notamment présenter une forme de chevrons ou de demi-chevrons s'étendant en direction axiale jusqu'au niveau du plan médian du pneumatique.

Dans une forme particulière de réalisation, les crampons sont disposés symétriquement d'un côté et de l'autre du plan médian du pneumatique.

En variante, dans d'autres formes de réalisation, les crampons sont disposés alternativement d'un côté et de l'autre du plan médian du pneumatique avec décalage d'un crampon au suivant en direction circonférentielle.

Dans une forme particulière de réalisation, les crampons ne s'étendent pas en direction axiale jusqu'au niveau du plan médian du pneumatique, de manière à laisser subsister entre eux un intervalle au sommet de la bande de roulement.

Dans encore une autre forme particulière, les crampons on une forme générale de losange ou une forme générale oblongue.

Avec ce type de crampons, le pneumatique peut être utilisé dans les deux directions et/ou enfilé indifféremment dans un sens ou dans l'autre, lors de l'empilement des pneumatiques sur le tube central du rouleau.

De préférence, le petit axe du losange ou du contour oblong s'étend généralement depuis le sommet du flanc jusqu'au plan médian du pneumatique, et les losanges ou les contours oblongs sont avantageusement disposés alternativement d'un côté et de l'autre du plan médian du pneumatique avec décalage d'un crampon au suivant en direction circonférentielle.

Dans ces formes de réalisation, la longueur des crampons, considérée en direction circonférentielle, est de dimension supérieure à leur largeur, considérée entre leur extrémité la plus proche du sommet du flanc et leur extrémité la plus proche du plan médian du pneumatique.

Sous un autre aspect, l'invention concerne un rouleau comportant une pluralité de pneumatiques tels que définis ci-dessus. L'invention concerne aussi une roue comportant un pneumatique tel que défini ci-dessus.

On va maintenant décrire des exemples de mise en oeuvre de l'invention, en référence aux dessins annexés où les mêmes références numériques désignent d'une figure à l'autre des éléments identiques ou fonctionnellement semblables.

La figure 1 est une vue en perspective, partiellement arrachée, d'un rouleau équipé d'une série de pneumatiques selon une première forme de réalisation de l'invention.

Les figures 2a et 2b sont des vues, respectivement de profil et en perspective, d'un pneumatique selon cette première forme de réalisation de l'invention, représenté isolément.

Les figures 3a et 3b sont homologues des figures 2a et 2b, pour une variante de la première forme de réalisation.

Les figures 4a et 4b sont des vues, respectivement de profil et en perspective, d'un pneumatique selon une deuxième forme de réalisation de l'invention.

Les figures 5a et 5b sont des vues, respectivement de profil et en perspective, d'un pneumatique selon une troisième forme de réalisation de l'invention.

Les figures 6a et 6b sont homologues des figures 5a et 5b, pour une variante de la troisième forme de réalisation.

La figure 7 est une vue en perspective d'une roue comportant un pneumatique selon l'invention, et d'un support de roue associé.

La figure 8 est une vue en perspective d'un ensemble formé à partir d'une pluralité de roues selon la figure 7.

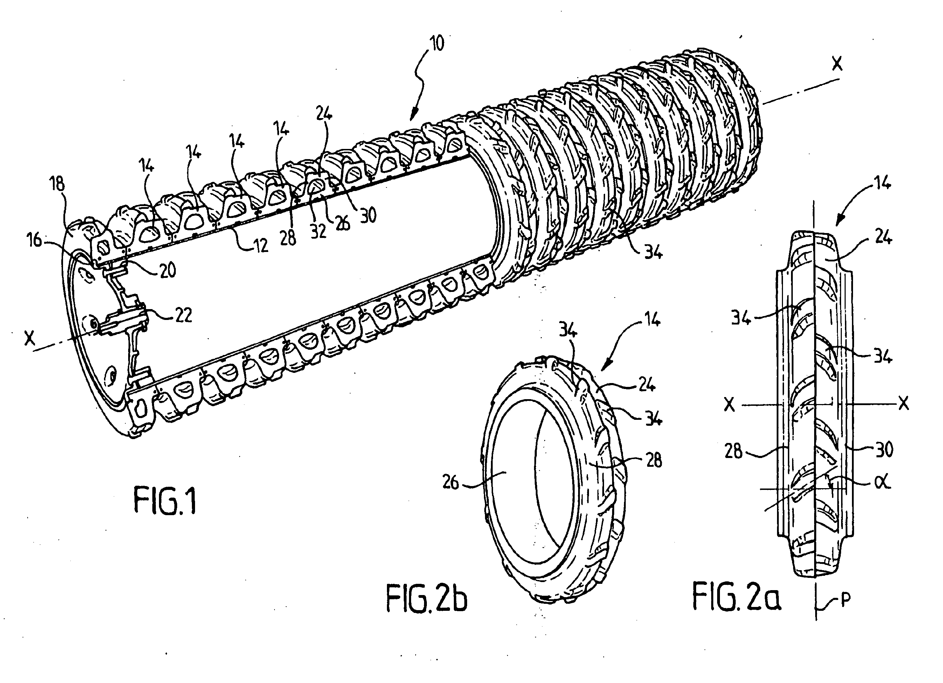

On se référera tout d'abord aux figures 1, 2a et 2b qui illustrent un pneumatique selon une première forme de réalisation de l'invention.

Le pneumatique de l'invention est adapté à la réalisation d'un rouleau agricole 10, par exemple un rouleau pour semoir, comprenant un tube central 12 monté à rotation autour d'un axe X-X et sur lequel sont montés une succession de pneumatiques semblables 14 (l'un de ces pneumatiques est représenté isolément aux figures 2a et 2b).

La publication FR-A-2 841 733, au nom de la Demanderesse, décrit la manière de réaliser un tel rouleau à partir d'un empilement de pneumatiques à profil en dôme. Essentiellement, ces pneumatiques sont enfilés de façon jointive les uns contre les autres et maintenus à chaque extrémité de l'empilement, par exemple au moyen d'une joue d'extrémité 16 assurant le serrage et le maintien de la série de pneumatiques.

Il est possible aussi d'assembler les pneumatiques par leurs flancs respectifs formant des parties en contact et d'utiliser des organes de poussée aux extrémités pour réaliser l'assemblage.

Les divers pneumatiques de l'empilement peuvent être en outre solidarisés entre eux par des éléments d'assemblage appropriés (non représentés), par exemple ceux décrits dans la publication FR-A-2 784 331, au nom de la Demanderesse, à laquelle on pourra se référer pour de plus amples détails.

La joue d'extrémité 16 vient en appui contre le dernier pneumatique 18 de l'empilement, qui du fait de cette fonction peut présenter un profil légèrement différent des pneumatiques 14, pour lui permettre de s'emboîter dans la joue 14. La joue est elle-même solidarisée en 20 au tube central 12. De cette manière, l'empilement des pneumatiques et le tube forment un ensemble solidaire constituant un rouleau susceptible d'être monté via un moyeu 22 sur un bâti-support d'une machine agricole comportant d'autres éléments (semoir, timon, etc.) et tractée dans une direction perpendiculaire à la direction axiale X-X du rouleau 10. Le déplacement du bâti-support entraîne par réaction des pneumatiques sur le sol la rotation du rouleau 10 mené.

Les pneumatiques créent dans le sol des sillons parallèles entre eux, sillons dans lesquels pourront par exemple être semées des graines. L'espacement entre les sillons correspond à l'intervalle entre les bandes de roulement des pneumatiques adjacents ; pour ajuster cet espacement, il est éventuellement possible d'interposer entre les pneumatiques adjacents des éléments annulaires intercalaires dont la largeur en direction axiale sera choisie en fonction de l'écart voulu pour les sillons. La largeur des sillons créés par les pneumatiques peut être choisie en fonction des applications pour permettre, par exemple, de former une seule ligne de semis ou bien au moins deux lignes de semis.

Le pneumatique approprié à l'usage que l'on vient d'indiquer est du type général décrit dans la publication FR-A-2 763 279 citée en introduction, c'est-à-dire dont la partie destinée à venir en contact avec le sol à travailler, ou avec la chaussée de la route, est une partie formant bande de roulement 24 à profil en dôme (profil arrondi convexe). Cette bande de roulement 24 est reliée par deux flancs opposés 28, 30 à une partie élargie 26 formant fourreau, propre à être enfilée sur le tube 12.

Les deux flancs 28, 30 définissent à l'intérieur du pneumatique un espace annulaire 32 de section transversale réduite par rapport à la section transversale du profil d'ensemble en dôme du pneumatique. Cet espace annulaire creux 32 n'est pas gonflé, il peut communiquer avec le milieu ambiant par l'intermédiaire d'un orifice traversant l'épaisseur du fourreau 26 (cet orifice, non représenté, outre l'équilibrage des pressions en utilisation, sert lors de la fabrication du pneumatique à l'injection d'air sous pression lors de l'étape de vulcanisation). Il est en effet souhaitable que le pneumatique puisse se déformer quelque peu dans la région comprise entre la bande de roulement 24 et le fourreau 26 pour faciliter le décollement de la terre qui, sinon, aurait tendance à adhérer au pneumatique dans la région des flancs 28, 30. Cette déformation du pneumatique, qui lui procure une souplesse suffisante pour amortir les déformations et être autonettoyant, est cependant limitée par la forme en dôme, qui évite que la bande de roulement ne s'affaisse de façon excessive.

Le fourreau central peut être mécaniquement renforcé par un ou plusieurs câbles torsadés ou un jonc métallique noyé dans la matière du pneumatique, en particulier pour assurer un meilleur maintien sur le tube 12 en dépit des sollicitations mécaniques reçues par le pneumatique, qui peuvent être assez intenses et brutales, notamment sur route.

De façon caractéristique de l'invention, le pneumatique 14 comporte au sommet de la bande de roulement 24 des crampons tels que 34, formés à la périphérie du pneumatique et répartis en direction circonférentielle.

Dans un premier mode de réalisation, illustré figures 1, 2a et 2b, ces crampons sont disposés obliquement, c'est-à-dire qu'ils forment un angle α (figure 2a), de l'ordre de 30° à 45°, alternativement dans un sens et dans l'autre.

Les crampons 34 de ce mode de réalisation sont conçus de manière à s'étendre chacun dans un demi-espace défini par le plan médian P, alternativement d'un côté et de l'autre de ce plan P, les crampons étant en outre décalés circonférentiellement d'un crampon au suivant.

Cette disposition donne, comme illustré sur les figures 1, 2a et 2b, une configuration en demi-chevrons décalés, orientés dans le sens de rotation du pneumatique.

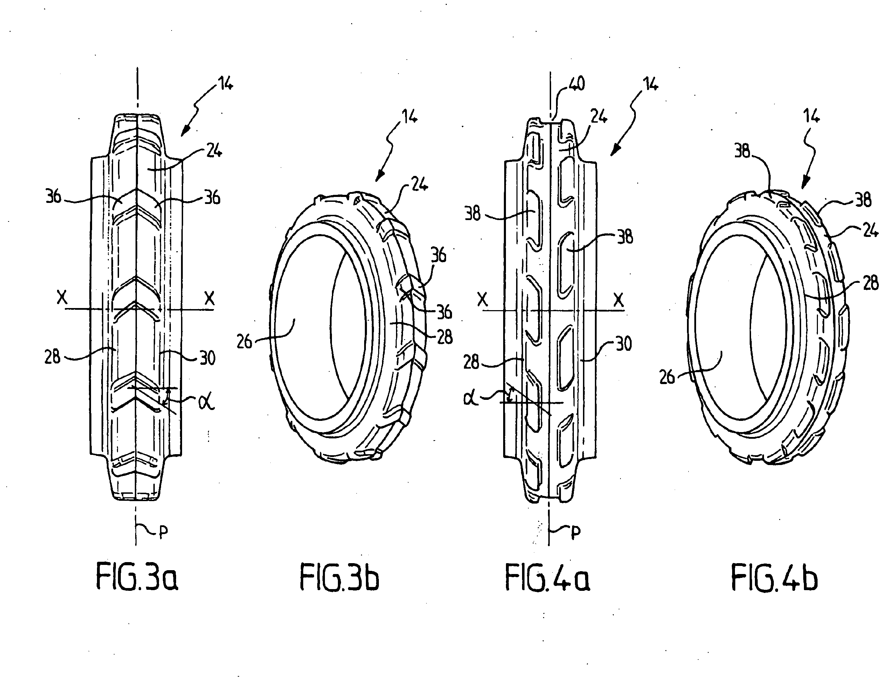

Dans une variante illustrée figures 3a et 3b, les crampons 36 sont semblables aux crampons 34 du mode de réalisation précédent, à la différence qu'en direction circonférentielle ils ne sont pas décalés d'un crampon au suivant, donnant alors une configuration en chevrons entiers, c'est-à-dire une forme en V avec deux branches symétriques attenantes s'étendant de part et d'autre du plan médian P et se rejoignant au niveau de ce plan.

Dans un second mode de réalisation, illustré figures 4a et 4b, les crampons 38 sont décalés circonférentiellement par rapport au plan médian P (comme dans le cas des figures 2a et 2b), mais ils ne s'étendent pas jusqu'au plan médian P, et donc laissent subsister au sommet de la bande de roulement 24 un intervalle 40 lisse entre les deux rangées de crampons 38.

On notera également que, dans cette dernière forme de réalisation, la longueur des crampons 38, considérée en direction circonférentielle, est de dimension supérieure à leur largeur, considérée entre leur extrémité la plus proche du sommet du flanc 28 ou 30 et leur extrémité la plus proche du plan médian P, à l'inverse du mode de réalisation des figures 2a et 2b, et 3a et 3b.

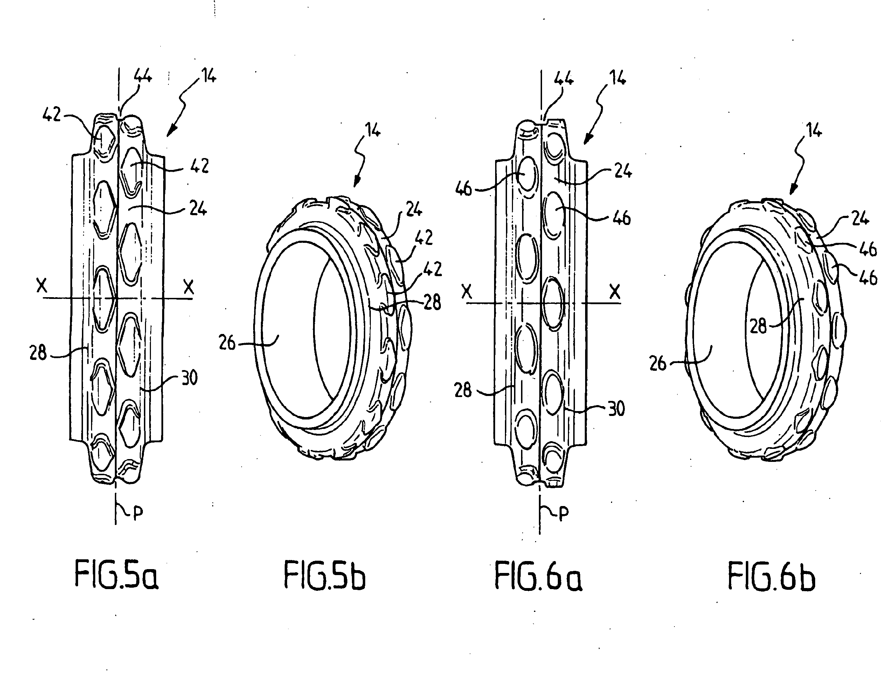

Les figures 5a et 5b illustrent un troisième mode de réalisation, où les crampons 42 présentent approximativement une forme de losange. Le petit axe du losange s'étend approximativement depuis le sommet du flanc 28 ou 30 jusqu'au plan médian P. Les crampons 42 sont décalés en direction circonférentielle d'un crampon au suivant, ce qui laisse subsister au sommet de la bande de roulement une zone lisse 44 non plus rectiligne comme dans le cas des figures 4a et 4b, mais en forme de zigzag.

Dans ce mode de réalisation, la forme des crampons permet de monter le pneumatique indifféremment dans un sens ou dans l'autre et/ou de l'utiliser dans les deux directions de rotation, à la différence des modes de réalisation précédentes.

Les figures 6a et 6b illustrent une variante du mode de réalisation précédent, où les crampons 46 ont sensiblement la même disposition mais présentent une forme oblongue, à la différence de la forme en losange des crampons 42 des figures 5a et 5b. Cette forme oblongue, plus arrondie, permet un meilleur décollement de la terre sur terrain lourd.

On notera que, dans tous les modes de réalisation illustrée, les flancs 28, 30 sont dépourvus de crampons : les crampons 34, 36, 38, 42 ou 46 ne s'étendent en effet que sur la bande de roulement 24, à partir du sommet des flancs. De la sorte, les crampons ne font pas saillie par rapport aux flancs et ne gênent donc pas l'action des grattoirs habituellement présents sur les machines agricoles utilisant ces pneumatiques.

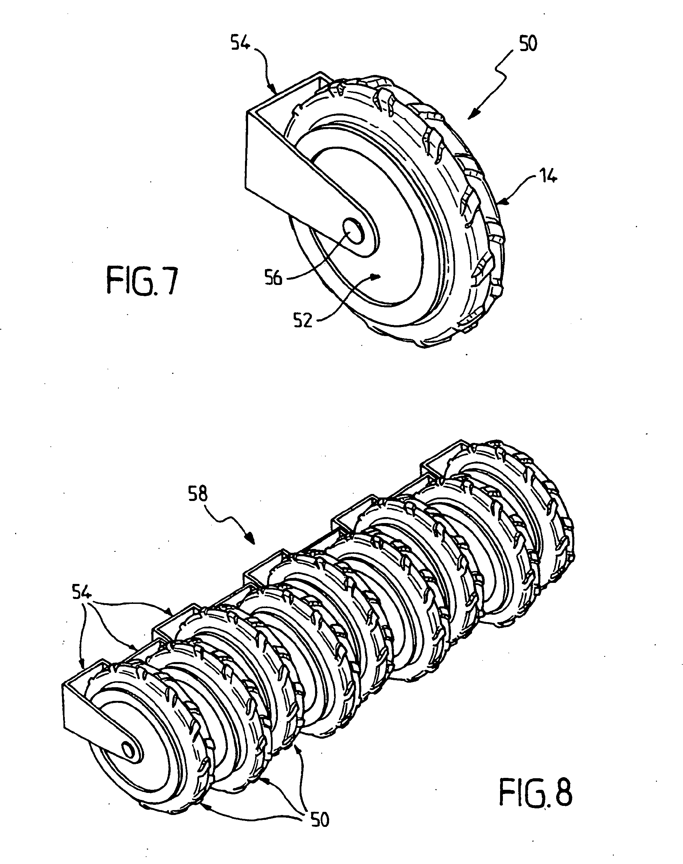

La figure 7 montre en perspective une roue 50 comportant une jante 52, réalisée en une ou plusieurs parties, sur laquelle est montée un pneumatique 14 selon l'invention. La roue 50 est portée par un support 54 en forme d'étrier par l'intermédiaire d'un pivot 56.

La figure 8 montre comment plusieurs roues 50 avec leurs supports respectifs 54, dans l'exemple au nombre de neuf, peuvent être regroupées pour former un ensemble 58 qui s'apparente à un rouleau mais dans lequel les roues individuelles sont indépendantes. Les supports 54 des roues sont ici décalés deux à deux pour éviter une disposition coaxiale des roues 50. Les supports 54 peuvent être par exemple montés sur des bras respectifs indépendants (non représentés) pour permettre aux roues de mieux suivre les irrégularités du sol sur lequel elles se déplacent.

Le pneumatique de l'invention peut être réalisé à partir des mêmes techniques de fabrication que celles des pneumatiques semi-creux à surface lisse. Essentiellement, le procédé consiste à réaliser un profilé extrudé creux en matériau élastomère et à découper une section de ce profilé. Les extrémités de cette section sont raboutées pour obtenir un élément circulaire, puis cet élément circulaire est placé dans un moule et vulcanisé de manière en elle-même conventionnelle, pour obtenir le pneumatique fini.

## Revendications

1. Pneumatique (14) du type semi-creux pour machine agricole, notamment pour une machine comportant un rouleau muni d'une série de pneumatiques montés sur un tube horizontal (12), ce pneumatique comprenant un fourreau central (26) et au moins une partie de roulement à profil en dôme comportant une bande de roulement (24) reliée au fourreau (26) par deux flancs (28, 30) de manière à délimiter un espace annulaire creux (32) de section transversale réduite par rapport à la section transversale du profil en dôme, **caractérisé en ce qu'**il comporte une pluralité de crampons périphériques (34 ; 36 ; 38 ; 42 ; 46) formées en saillie sur la bande de roulement (24) et répartis dans la direction circonférentielle au sommet du profil en dôme.

2. Pneumatique selon la revendication 1, **caractérisé en ce que** les crampons (34 ; 36 ; 38 ; 42 ; 46) sont disposés sur la bande de roulement de part et d'autre du plan médian (P) du pneumatique.

3. Pneumatique selon la revendication 1, **caractérisé en ce que** les crampons (34 ; 36 ; 38 ; 42 ; 46) s'étendent, en direction axiale, depuis le sommet des flancs (28, 30) vers le plan médian (P) du pneumatique, et sans faire axialement saillie de la surface de ces flancs.

4. Pneumatique selon la revendication 1, **caractérisé en ce qu'**au moins certains des crampons (34 ; 36 ; 38) s'étendent suivant une plus grande dimension formant un angle (α) par rapport à l'axe (X-X) du pneumatique.

5. Pneumatique selon la revendication 4, **caractérisé en ce que** la largeur des crampons (34 ; 36), considérée entre leur extrémité la plus proche du sommet du flanc et leur extrémité la plus proche du plan médian (P) du pneumatique, est de dimension supérieure à leur longueur, considérée en direction circonférentielle.

6. Pneumatique selon la revendication 5, **caractérisé en ce que** les crampons ont une forme de chevrons (36) ou de demi-chevrons (34) s'étendant en direction axiale jusqu'au niveau du plan médian (P) du pneumatique.

7. Pneumatique selon la revendication 2, **caractérisé en ce que** les crampons (36) sont disposés symétriquement d'un côté et de l'autre du plan médian (P) du pneumatique.

8. Pneumatique selon la revendication 2, **caractérisé en ce que** les crampons (34 ; 38 ; 42 ; 46) sont disposés alternativement d'un côté et de l'autre du plan médian (P) du pneumatique avec décalage d'un crampon au suivant en direction circonférentielle.

9. Pneumatique selon la revendication 2, **caractérisé en ce que** les crampons (38) ne s'étendent pas en direction axiale jusqu'au niveau du plan médian (P) du pneumatique, de manière à laisser subsister entre eux un intervalle (40) au sommet de la bande de roulement.

10. Pneumatique selon la revendication 2, **caractérisé en ce que** les crampons (42) ont une forme générale de losange.

11. Pneumatique selon la revendication 2, **caractérisé en ce que** les crampons (46) ont une forme générale oblongue.

12. Pneumatique selon la revendication 10 ou 12, **caractérisé en ce que** le petit axe du losange ou du contour oblong s'étend généralement depuis le sommet du flanc jusqu'au plan médian (P) du pneumatique.

13. Pneumatique selon la revendication 10 ou 12, **caractérisé en ce que** les losanges ou les contours oblongs sont disposés alternativement d'un côté et de l'autre du plan médian (P) du pneumatique avec décalage d'un crampon au suivant en direction circonférentielle.

14. Pneumatique selon la revendication 9, 10 ou 11, **caractérisé en ce que** la longueur des crampons (38 ; 42 ; 46), considérée en direction circonférentielle, est de dimension supérieure à leur largeur, considérée entre leur extrémité la plus proche du sommet du flanc et leur extrémité la plus proche du plan médian (P) du pneumatique.

15. Rouleau (10) comportant une pluralité de pneumatiques (14) selon l'une des revendications 1 à 14.

16. Roue (50) comportant un pneumatique (14) selon l'une des revendications 1 à 14.

## Claims

1. Pneumatic tyre (14) of the semi-hollow type for an agricultural machine, notably for a machine comprising a roller equipped with a series of tyres mounted on a horizontal tube (12), this tyre comprising a central sleeve (26) and at least one tread section with a dome shaped profile, comprising a tread (24) attached to the sleeve (26) by two sidewalls (28, 30) so as to define a hollow annular space (32) of reduced cross section compared with the cross section of the dome shaped profile,
**characterised in that** it comprises a plurality of peripheral grippers (34; 36; 38; 42; 46) formed to project from the tread (24) and distributed in the circumferential direction at the top of the dome shaped profile.

2. Tyre according to claim 1, **characterised in that** the grippers (34; 36; 38; 42; 46) are disposed on the tread on either side of the median plane (P) of the tyre.

3. Tyre according to claim 1, **characterised in that** the grippers (34; 36; 38; 42; 46) extend, in the axial direction, from the top of the sidewalls (28, 30) towards the median plane (P) of the tyre, without projecting axially from the surface of these sidewalls.

4. Tyre according to claim 1, **characterised in that** at least some of the grippers (34; 36; 38) extend to a greater extent forming an angle (α) relative to the axis (X-X) of the tyre.

5. Tyre according to claim 4, **characterised in that** the width of the grippers (34; 36), measured between their end closest to the top of the sidewall and their end closest to the median plane (P) of the tyre, is greater than their length, measured in the circumferential direction.

6. Tyre according to claim 5, **characterised in that** the grippers are in the form of chevrons (36) or half chevrons (34) extending axially to the level of the median plane (P) of the tyre.

7. Tyre according to claim 2, **characterised in that** the grippers (36) are disposed symmetrically on either side of the median plane (P) of the tyre.

8. Tyre according to claim 2, **characterised in that** the grippers (34; 38; 42; 46) are arranged alternately on either side of the median plane (P) of the tyre, with one gripper being offset from the next in the circumferential direction.

9. Tyre according to claim 2, **characterised in that** the grippers (38) do not extend in the axial direction as far as the level of the median plane (P) of the tyre, so as to leave between them a gap (40) at the top of the tread.

10. Tyre according to claim 2, **characterised in that** the grippers (42) are generally lozenge shaped.

11. Tyre according to claim 2, **characterised in that** the grippers (46) are generally oblong in shape.

12. Tyre according to claim 10 or 12, **characterised in that** the short axis of the lozenge or of the oblong contour extends generally from the top of the sidewall to the median plan (P) of the tyre.

13. Tyre according to claim 10 or 12, **characterised in that** the lozenges or the oblong contours are disposed alternately on one side and the other of the median plan (P) of the tyre with offsetting of one gripper from the next in the circumferential direction.

14. Tyre according to claim 9, 10 or 11, **characterised in that** the length of the grippers (38; 42; 46) viewed in the circumferential direction, is greater than their width, measured between their end closest to the top of the sidewall and their end closest to the median plane (P) of the tyre.

15. Roller (10) comprising a plurality of tyres (14) according to one of claims 1 to 14.

16. Wheel (50) comprising a tyre (14) according to one of claims 1 to 14.

## Patentansprüche

1. Luftreifen (14) vom halbhohlen Typ für Landmaschinen, insbesondere für eine Maschine die eine Walze aufweist, die mit einer Reihe von Luftreifen versehen ist, die auf ein horizontales Rohr (12) montiert sind, wobei dieser Luftreifen ein zentrales Futteral (26) und wenigstens einen Rollabschnitt mit Kuppelprofil aufweist, mit einer Lauffläche (24), die mit dem Futteral (26) durch zwei Flanken (28, 30) verbunden ist, derart, dass ein hohler ringförmiger Raum (32) von verringertem Querschnitt gegenüber dem Querschnitt des Kuppelprofils begrenzt wird, **dadurch gekennzeichnet, dass** er eine Mehrzahl von Umfangskrampen (34; 36; 38; 42; 46) aufweist, die vorspringend an der Lauffläche (24) ausgebildet sind und in Umfangsrichtung verteilt am Scheitel des Kuppelprofils angeordnet sind.

2. Luftreifen nach Anspruch 1, **dadurch gekennzeichnet, dass** die Krampen (34; 36; 38; 42; 46) auf der Lauffläche beiderseits der Mittenebene (P) des Luftreifens verteilt angeordnet sind.

3. Luftreifen nach Anspruch 1, **dadurch gekennzeichnet, dass** die Krampen (34; 36; 38; 42; 46) sich in axialer Richtung von dem Scheitel der Flanken (28, 30) zur Mittenebene (P) des Luftreifens erstrecken und ohne axial von der Oberfläche dieser Flanken vorzuspringen.

4. Luftreifen nach Anspruch 1, **dadurch gekennzeichnet, dass** wenigstens bestimmte dieser Krampen (34; 36; 38) sich entlang einer größeren Abmessung erstrecken, die einen Winkel (α) bezüglich der Achse (X-X) des Luftreifens bildet.

5. Luftreifen nach Anspruch 4, **dadurch gekennzeichnet, dass** die Breite der Krampen (34, 36) betrachtet zwischen ihrem am nächsten liegenden Ende des Scheitels der Flanke und ihrem am nächsten liegenden Ende der Mittenebene (P) des Luftreifens, von einer Abmessung ist, die größer ist als ihre Länge, betrachtet in Umfangsrichtung.

6. Luftreifen nach Anspruch 5, **dadurch gekennzeichnet, dass** die Krampen die Form eines Fischgrätenmusters (36) oder eines halben Fischgrätenmusters (34) aufweiaufweisen, das sich in Axialrichtung bis auf die Höhe der Mittenebene (P) des Luftreifens erstreckt.

7. Luftreifen nach Anspruch 2, **dadurch gekennzeichnet, dass** die Krampen (36) auf beiden Seiten der Mittenebene (P) des Luftreifens symmetrisch angeordnet sind.

8. Luftreifen nach Anspruch 2, **dadurch gekennzeichnet, dass** die Krampen (34; 38; 42; 46) abwechselnd auf der einen und auf der anderen Seite der Mittenebene (P) des Luftreifens angeordnet sind, mit einem Versatz einer Krampe zur nächsten in Umfangsrichtung.

9. Luftreifen nach Anspruch 2, **dadurch gekennzeichnet, dass** die Krampen (38) sich nicht in Axialrichtung bis auf die Höhe der Mittenebene (P) des Luftreifens erstrecken, derart, dass sie untereinander einen Zwischenraum (40) auf dem Scheitel der Lauffläche weiter bestehen lassen.

10. Luftreifen nach Anspruch 2, **dadurch gekennzeichnet, dass** die Krampen (42) eine allgemeine Form einer Raute aufweisen.

11. Luftreifen nach Anspruch 2, **dadurch gekennzeichnet, dass** die Krampen (46) eine allgemein längliche Form aufweisen.

12. Luftreifen nach Anspruch 10 oder 11, **dadurch gekennzeichnet, dass** die kleine Achse der Raute oder der länglichen Kontur sich allgemein von dem Scheitel der Flanke bis zur Mittenebene (P) des Luftreifens erstreckt.

13. Luftreifen nach Anspruch 10 oder 11, **dadurch gekennzeichnet, dass** die Rauten oder die länglichen Konturen abwechselnd auf der einen und der anderen Seite der Mittenebene (P) des Luftreifens angeordnet sind, mit einem Versatz der einen Krampe zur nächsten in Umfangsrichtung.

14. Luftreifen nach Anspruch 9, 10 oder 11, **dadurch gekennzeichnet, dass** die Länge der Krampen (38; 42; 46), in Umfangsrichtung betrachtet, von einer größeren Dimension ist als deren Breite, betrachtet zwischen ihrem Ende, das dem Scheitel der Flanke am nächsten ist und ihrem Ende, das der Mittenebene (P) des Luftreifens am nächsten ist.

15. Walze (10) mit einer Mehrzahl von Luftreifen (14) nach einem der Ansprüche 1 bis 14.

16. Rad (50), das einen Luftreifen (14) nach einem der Ansprüche 1 bis 14 aufweist.
